(19) **Europäisches Patentamt / European Patent Office / Office européen des brevets**

(11) **EP 2 521 294 A1**

(12) # EUROPEAN PATENT APPLICATION
published in accordance with Art. 153(4) EPC

(43) Date of publication:
**07.11.2012 Bulletin 2012/45**

(21) Application number: **09852761.7**

(22) Date of filing: **30.12.2009**

(51) Int Cl.:
*H04J 14/02* (2006.01)     *H04B 10/04* (2006.01)
*H04B 10/06* (2006.01)

(86) International application number:
**PCT/ES2009/070641**

(87) International publication number:
**WO 2011/080358 (07.07.2011 Gazette 2011/27)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Telefónica, S.A.**
**28013 Madrid (ES)**

(72) Inventors:
• **FERNÁNDEZ-PALACIOS JIMÉNEZ, Juan Pedro**
**E-28043 Madrid (ES)**

• **JIMÉNEZ CHICO, Francisco Javier**
**E-28043 Madrid (ES)**
• **GONZÁLEZ DE DIOS, Oscar**
**E-28043 Madrid (ES)**

(74) Representative: **Carpintero Lopez, Francisco**
**Herrero & Asociados, S.L.**
**Alcalá 35**
**28014 Madrid (ES)**

(54) **SYSTEM AND METHOD FOR DISTRIBUTING DIGITAL SIGNALS OVER LONG-DISTANCE SWITCHED OPTICAL TRANSPORT NETWORKS**

(57)     The present invention relates to a system and method for distributing digital signals over wavelength-switched optical transport networks with long-distance optical multicasting capability comprising a transmitter module and a receiver module in the headend of primary network and in the local node, respectively, for multicasting IPTV channels with HDTV, UHDTV and 3DTV signals. The transmitter module comprises an Ethernet switch, three DPSK modulators and a DWDM optical multiplexer. The receiver module comprises an Ethernet switch, three DPSK demodulators and a DWDM optical demultiplexer. In a novel manner, both modules combine 2 Gbps digital transmission, RZ-DPSK modulation and optical multicasting over a wavelength-switched optical network, WSON.

FIG. 4

**Description**

<u>Object of the Invention</u>

As expressed in the title of the present specification, the present invention relates to a system and a method for distributing digital signals over long-distance switched optical transport networks. The main field of application is the distribution of digital TV signals over Internet Protocol Television, IPTV, through the optical networks of the providers of said digital TV signals to the local nodes providing services to end users. To that end, the present invention comprises a system consisting of a transmitter module located in the headend of primary network of the service provider and of a receiver module located in said local node.

<u>Background of the Invention</u>

The volume of IPTV traffic over long-distance switched optical transport networks does not depend on the number of users but on the number, the definition and the coding of the TV channels transmitted through said networks.
Digital TV services take up a bandwidth of 10 Mbps, 400 Mbps and 100 Mbps for HDTV, UHDTV and 3DTV signals, respectively. According to the bandwidths above, a service comprising 100 HDTV channels, 10 3DTV channels and 10 UHDTV channels, needs 6 Gbps from the headend of primary network of the service provider to the local nodes (Service PoPs in metro area).
On the other hand, wavelength-division multiplexing (WDM) is a technology provided for increasing the bandwidth capacity and enabling bidirectional communications in optical networks. In wavelength-division multiplexing (WDM) networks, several data signals can be transmitted between network elements using a single fiber. More specifically, different wavelengths must be assigned to the signals in transmission so that they do not interfere or collide with one another. The path that a signal takes through the network is known as a lightpath. One type of wavelength-division multiplexing (WDM) network is the wavelength-switched optical network (WSON). Said type of network switches the optical signals by means of a reconfigurable optical add-drop multiplexer (ROADM) without needing to perform optic-electric-optic (OEO) type reconversions. The reconfigurable optical add-drop multiplexers can provide one to several outputs of a channel for optical multicasting, such that a single optical channel (lambda) can be used for point-to-multipoint (P2MP) connections.
There are different solutions for providing optical multicasting over WSON networks in the state of the art.
The current optical multicasting systems capable of combining the bandwidth requirements for providing digital TV services taking up a bandwidth of 10 Mbps, 400 Mbps and 100 Mbps for HDTV, UHDTV and 3DTV signals, respectively, are based on 10 Gbps CS-NRZ (Carrier-Suppressed NonReturn-to-Zero) transmission.
The systems described above have drawbacks significantly reducing their reach due to the fact that these systems are strongly affected by mainly two physical impediments: amplified spontaneous emissions (ASE) and filter cascading effects.
The amplifiers add amplified spontaneous emission noise to a signal as the signal traverses the different amplifiers, which reduces the optical signal to noise ratio (OSNR) of said signal. The accumulation of amplified spontaneous emissions at the end limits the transmission distance if 3R regenerators are not present between transmitter and receiver.
The minimum optical signal to noise ratio, $OSNR_{min}$, is calculated through the following formula:

$$OSNR_{min}[dB] = 10 \log_{10} \left( \frac{P_{input}}{N_{ampl} F \cdot h \cdot f_0 \cdot \Delta f_0} \right)$$

"$P_{input}$" being the strength of the optical signal, "$N_{ampl}$" the number of amplifiers, "F" the noise figure of the amplifier, "h" the Planck constant, "$f_0$" the central frequency, "$\Delta f_0$" the optical bandwidth.
Optical signal to noise ratio, OSNR, degradation is especially important in optical multicasting applications since the strength of the optical signal is divided between all the output ports. In point-to-point optical casting, the strength at the output of the reconfigurable optical add-drop multiplexer $P_{output}$ (P2P) is:

$$P_{output}(P2P) = P_{output}(P2P) - \alpha;$$

"$P_{output}$ (P2P)" being the strength at the output in decibels, "$P_{input}$ (P2P)" the strength at the input in decibels and "$\alpha$"

the losses in decibels, dB. Meanwhile in point-to-multipoint optical casting, the reconfigurable optical add-drop multiplexer $P_{output}$ (P2MP) is:

$P_{output}$ (P2MP) = $P_{input}$ (P2MP) - $\alpha \cdot$10log(1/N);

"$P_{output}$ (P2MP)" being the strength at the output in decibels, "$P_{input}$ (P2MP)" the strength at the input in decibels, "$\alpha$" the losses in decibels, "N" the number of output ports per multicast signal.

Therefore, optical multicasting introduces penalties greater than point-to-point casting. Consequently, channel multicasting has less ONSR figures than point-to-point channel casting. Furthermore, the optical signal to noise ratio, OSNR, degradation in the current multicasting systems impacts the number of electronic regenerators in the network.

On the other hand, filter cascading effects are a result of band-pass filters and of band-reject filters containing the reconfigurable optical add-drop multiplexers (ROAMs) for switching and routing wavelength-switched optical network (WSON).

The transfer function of a real filter is very hard to predict due to the discrepancy in its shape and its central frequency. In general, the shape of the resulting effective filter experienced by a lighpath is considerably narrower and its borders considerably steeper. From the representations of the filter cascading effects it is inferred that filter cascading effects only impact those optical signals with greater optical width of bandwidth with respect to the complete shape of the filters.

Therefore, the link involving the filter cascading effects can be minimized by reducing the optical bandwidth of the multicasting channels.

The current configurations in which the headend of primary network of the service provider and the local nodes are separated by several thousands of kilometers require several reconfigurable optical add-drop multiplexers entailing the drawbacks discussed previously. To solve said drawbacks, expensive 3R regenerators arranged along said several thousands of kilometers can be found in the state of the art.

Consequently, it would be desirable to find any type of system which will minimize or even eliminate the drawbacks discussed previously completely.

Description of the Invention

To achieve the objectives and to prevent the previously indicated drawbacks, the invention comprises a system and a method for distributing digital signals over long-distance switched optical transport networks, the main application of which is the distribution of digital TV signals over Internet Protocol Television, IPTV.

The major advantage of the system of the present invention lies in the increase in the tolerance with respect to amplified spontaneous emissions (ASE) and with respect to filter cascading effects. To carry out said increase in tolerance, the system of the present invention comprises a transmitter module located in the headend of primary network of the service provider and a receiver module located in said local node, which combine three existing technologies in a novel manner including:

- 2 Gbps digital transmission;
- RZ-DPSK (Return to Zero Differential Phase Shift keying) modulation; and,
- Optical multicasting over wavelength-switched optical network (WSON).

Said wavelength-switched optical network (WSON) with optical multicasting capability is a type of long-distance switched optical transport network.

By means of said novel combination of technologies, the present invention achieves an optical bandwidth per channel ten times narrower than the current systems based on 10 Gbps transmissions with CS-NRZ (carrier-suppressed non-return-to-zero) modulations. Consequently, the sensitivity of the optical signal-noise ratio (OSNR) and the tolerance to filter cascading effects is significantly improved:

- $OSNR_{min}$: 6 dB, 10 dB lower than the current 10 Gbps NRZ (non-return-to-zero) transmission schemes. A lower sensitivity, lower signal degradation due to the noise of the amplifiers.
- Tolerance to cascading filters: 3 to 4 times greater than the current 10 Gbps NRZ (non-return-to-zero) transmission schemes.

The system for distributing digital signals over long-distance switched optical transport networks, said signals being selected from the group made up of HDTV signals, UHDTV signals and 3DTV signals, said system comprising a headend of primary network of a service provider, at least one local node and at least one wavelength-switched optical network with optical multicasting capability, comprises at least:

- one transmitter module located at the output of the headend of primary network and connecting said headend of primary network with the wavelength-switched optical network with optical multicasting capability, wherein said transmitter module comprises at least:

- ○ one Ethernet switch;
- ○ three DPSK modulators;
- ○ one DWDM optical multiplexer;

• one receiver module per local node connecting said local node with the wavelength-switched optical network with optical multicasting capability, wherein said receiver module comprises at least:

- ○ one DWDM optical demultiplexer;
- ○ three DPSK demodulators;
- ○ one Ethernet switch.

Additionally, the Ethernet switch comprised in the transmitter module distributes the digital signal from the 6 Gbps headend equipment to the three DPSK modulators by means of three carriers, each of them comprising a 2 Gbps digital signal.

Furthermore, each DPSK modulator comprised in the transmitter module modulates the carrier at a frequency, such that a DPSK modulator modulates a carrier at the central frequency f0 of a standard cell, and the other two modulators modulate the carriers at a frequency of 10 GHz above and below the value of the central frequency of the standard cell, i.e., f0 + 10 GHz and f0 - 10 GHz, respectively.

Additionally, the DWDM optical multiplexer comprised in the transmitter module multiplexes the three modulated digital signals from the three DPSK modulators and transmits them through the wavelength-switched optical network with optical multicasting capability.

Furthermore, the DWDM optical demultiplexer comprised in the receiver module extracts and separates the three carriers comprised in respective multiplexed signals received through the wavelength-switched optical network with optical multicasting capability from the DWDM optical multiplexer to be sent to the three DPSK demodulators.

Additionally, each of the three DPSK demodulators comprised in the receiver module extracts the digital signal comprised in each of the three carriers.

Additionally, the Ethernet switch comprised in the receiver multiplexes the 2 Gbps signals received from the three DPSK demodulators into the 6 Gbps initial digital signal.

On the other hand, the method for distributing digital signals over long-distance switched optical transport networks, said digital signals being selected from the group consisting of digital HDTV signals, digital UHDTV signals and digital 3DTV signals, for the system defined previously, comprises at least the following steps:

• distributing the digital signal to three DPSK modulators by means of an Ethernet switch comprised in the transmitter module;
• modulating the digital signal in three carriers the central frequencies of which are separated from one another by 10 GHz by means of the three DPSK modulators comprised in the transmitter module, such that the central frequency of a carrier coincides with the central frequency f0 of a standard cell and the central frequency of the other two carriers are 10GHz above and 10 GHz below the central frequency of the standard cell;
• multiplexing and transmitting the three modulated signals simultaneously through a wavelength-switched optical network with optical multicasting capability by means of the DWDM optical multiplexer comprised in the transmitter module;
• extracting and separating the three multiplexed signals received through the wavelength-switched optical network with optical multicasting capability, the carriers contained in said received signals, to be sent to the three demodulators by means of the DWDM demultiplexer comprised in the receiver module;
• extracting the three 2 Gbps digital signals comprised in respective carriers by means of the three DPSK demodulators comprised in the receiver module; and,
• multiplexing the three 2 Gbps digital signals into the 6 Gbps initial digital signal by means of the Ethernet switch comprised in the receiver.

To better understand the specification, several figures forming part of same in which the object of the invention has been depicted with an illustrative and nonlimiting character are attached:

Description of the Drawings

Figure 1 shows a diagram of the high level IPTV service architecture where the present invention is implemented.

Figure 2 shows a block diagram of the main modules comprised by the present invention.

Figure 3 shows a block diagram of an example of the state of the art for multicasting signals with carrier $\lambda_{TV}$ transmitted from a transmission module of the state of the art to a receiver module of the state of the art.

Figure 4 shows a block diagram according to the present invention for multicasting signals with carrier $\lambda_{TV}$ transmitted from the transmitter module of the present invention to the receiver module of the present invention.

Figure 5 shows a block diagram of the devices comprised by the transmitter module according to the present invention.

Figure 6 shows a block diagram of the devices comprised by the receiver module according to the present invention.

Figure 7 shows a flow chart of the steps associated with the method of the present invention.

Description of an Embodiment of the Invention

An embodiment of the invention is described below making reference to the numbering adopted in the drawings.

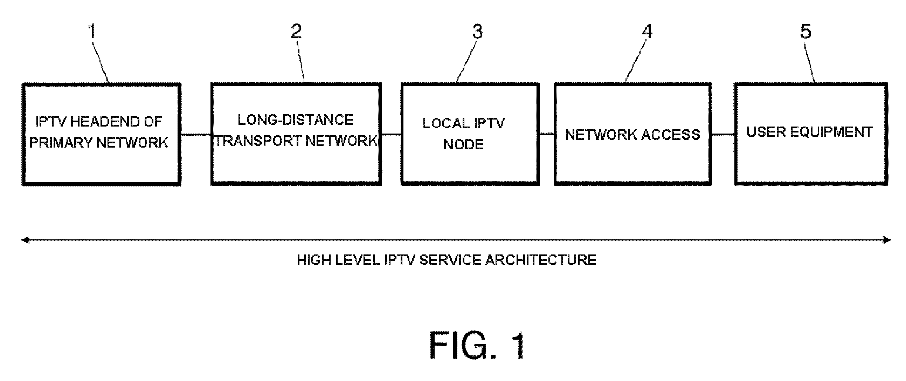

Figure 1 shows a diagram of the high level IPTV service architecture where the present invention is implemented. Said high level architecture comprises an IPTV headend of primary network (1), a long-distance transport network (2), a local IPTV node (3), a network access (4) and a piece of user equipment (5). The scope of the invention is comprised within the long-distance transport network (2), for which, the present invention comprises a transmitter located in the IPTV headend of primary network (1) and a receiver located in the local IPTV node (3).

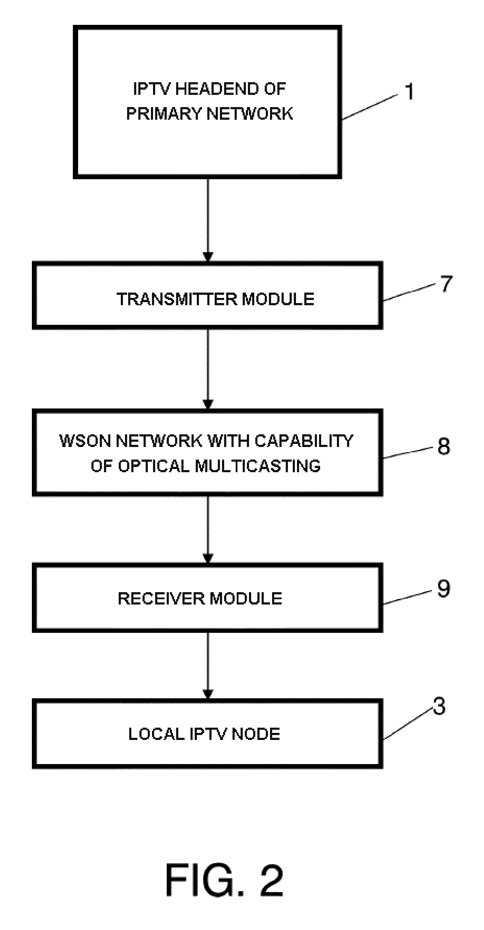

Figure 2 shows a block diagram comprising the IPTV headend of primary network (1), the transmitter module (7) defined by the present invention, a wavelength-switched optical network WSON with optical multicasting capability (8), the receiver module (9) defined by the present invention and a local IPTV node (3).

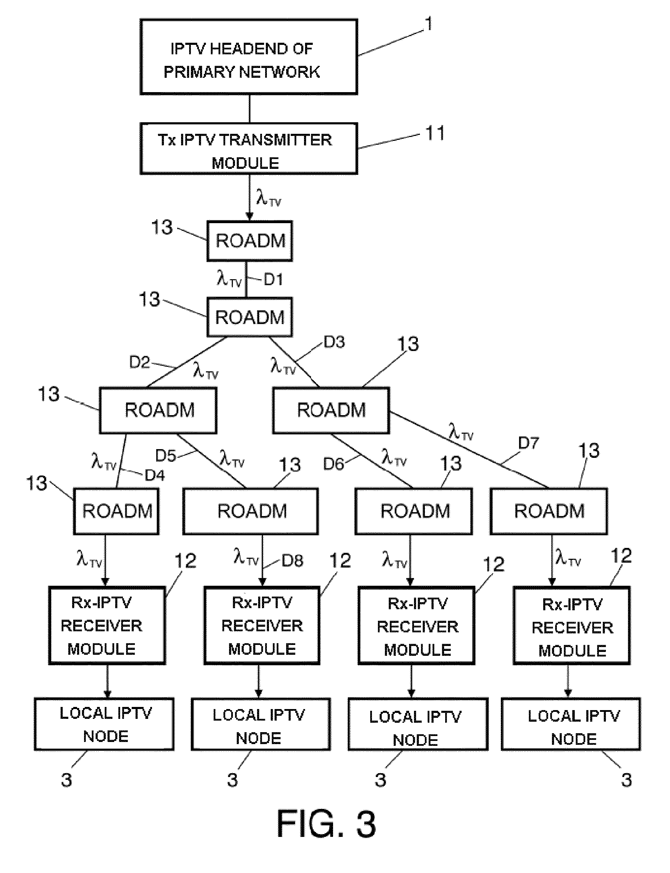

Figure 3 shows a block diagram of an example of the state of the art for multicasting signals with carrier $\lambda_{TV}$ transmitted from a transmission module (11) of the state of the art to a receiver module (12) of the state of the art, wherein both modules use a 10 Gbps CS-NRZ (convergence sub-layer non return-to-zero) coding. The distances D1, D2, D3, D4, D5, D6, D7 and D8 corresponding with the values in kilometers of 4, 530, 320, 141, 137, 138, 470 and 65, respectively, are also specified.

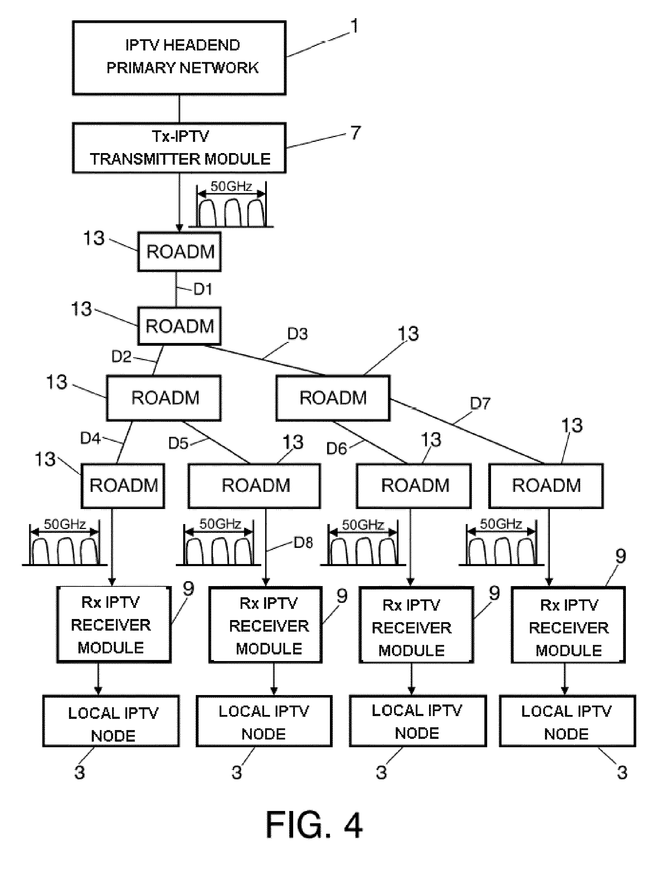

Figure 4 shows a block diagram according to the present invention for multicasting signals with carrier $\lambda_{TV}$ transmitted from the transmitter module (7) of the present invention to the receiver module (9) of the present invention, wherein the transmitter module (7) generates three 2 Gbps DPSK optical carriers within a single 50 GHz bandwidth cell. The receiver module (9) demodulates the three 2 Gbps DPSK optical carriers generated by the transmitter module (7). The distances D1, D2, D3, D4, D5, D6, D7 and D8 corresponding with the values in kilometers of 4, 530, 320, 141, 137, 138, 470 and 65, respectively, are also specified.

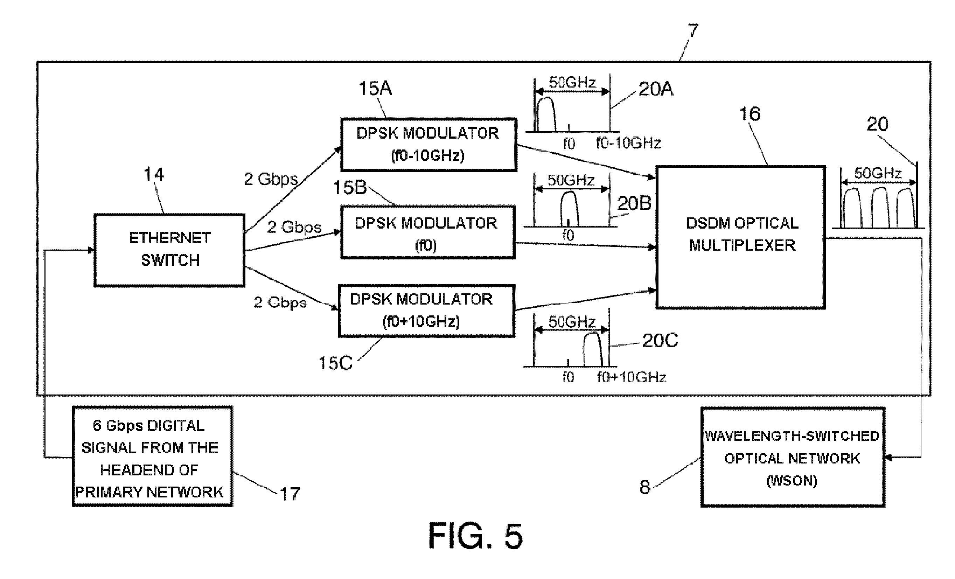

Figure 5 shows a block diagram of the devices comprised by the transmitter module (7) according to the present invention as well as the input and the output thereof. Said transmitter module (7) comprises the Ethernet switch (14), three DPSK modulators (15A, 15B, 15C) and a DWDM optical multiplexer (16). It also shows the input of the Ethernet switch (14) comprising the 6 Gbps digital signal (17) from the headend of the primary network, and on the other hand, it shows that the output of the transmitter module (7) is directed to the wavelength-switched optical network (WSON) (8). Additionally, it shows how the Ethernet switch (14) receives the 6 Gbps signal and switches it into three 2 Gbps signals. On the other hand, one DPSK modulator (15B) of the three modulators comprised by the transmitter module (7) modulates the frequency of the signal which it receives at the central frequency of a standard network cell f0 (20B), said frequency being 193.1 THz or any central frequency of any cell of those defined in the DWDM grid defined by ITU Recommendation G.694.1, whereas another DPSK modulator (15A) modulates the signal which it receives at a frequency 10 GHz lower than said frequency f0, i.e., f0-10GHZ (20A), and the third DPSK modulator (15C) modulates the signal which it receives at a frequency 10 GHz greater, i.e., f0+10GHZ (20A). It also shows that the standard cell comprises a bandwidth of 50 GHz (20). The DWDM optical multiplexer (16) receives the three modulated signals from the three modulators and multiplexes them to the wavelength-switched optical network (WSON) occupying the entire bandwidth of the standard cell and without interferences among them.

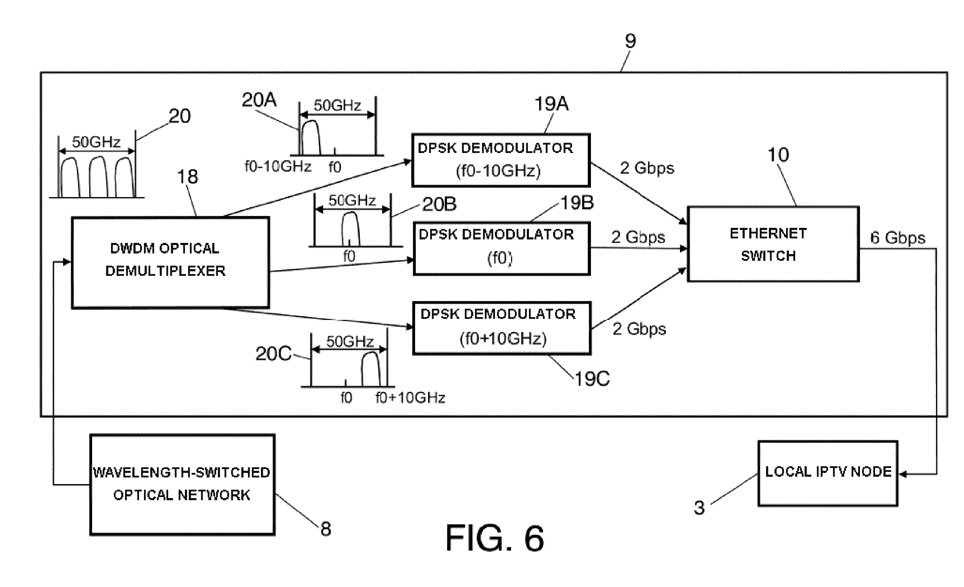

Figure 6 shows a block diagram of the devices comprised by the receiver module (9) according to the present invention as well as the input and the output thereof. Said receiver module comprises the DWDM optical demultiplexer (18), three DPSK demodulators (19A, 19B, 19C) and the Ethernet switch (10). It also shows that the digital signal formed by the three multiplexed signals reaches the input of the DWDM optical demultiplexer (18) by means of the wavelength-switched optical network (WSON) (8). On the other hand, each of the three demodulators (19A, 19B, 19C) receive a signal modulated at f0-10GHZ, f0 and f0+10GHZ, and demodulate them to 2 Gbps to the Ethernet switch (10). The Ethernet switch (10) in turn switches the three signals from the demodulators into the original 6 Gbps signal that left the I PTV headend of primary network.

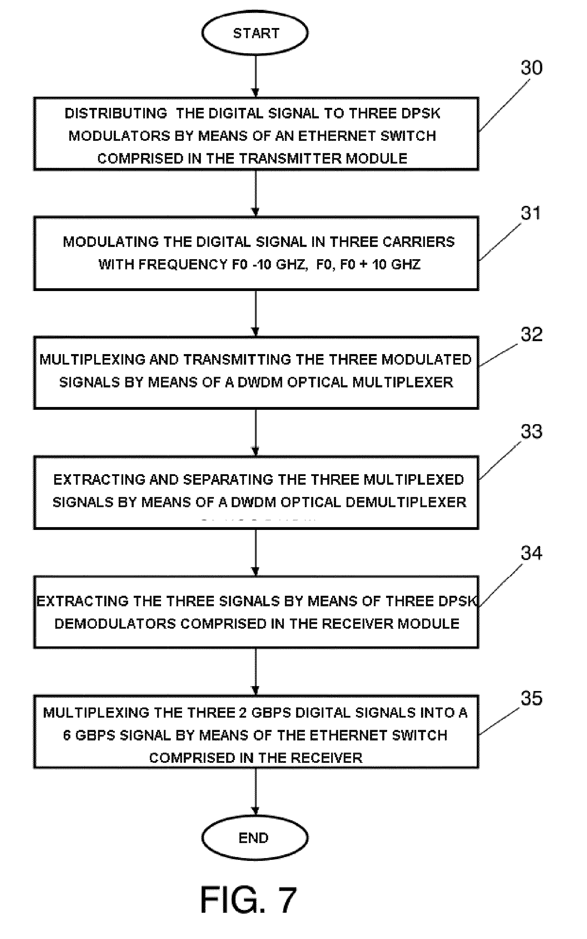

Figure 7 shows a flow chart of the steps associated with method of the present invention whereby improving the capability of sending digital television signals over internet protocol, IPTV, in long-distance transport networks such as the wavelength-switched optical network WSON, is made possible. Said method comprises at least the following steps:

- distributing (30) the digital signal to three DPSK modulators by means of an Ethernet switch comprised in the transmitter module (7);
- modulating (31) the digital signal in three carriers the central frequencies of which are separated from one another by 10 GHz by means of the three DPSK modulators comprised in the transmitter module (7), such that the central frequency of a carrier coincides with the central frequency f0 of a standard cell and the central frequency of the other two carriers are 10GHz above and 10 GHz below the central frequency of the standard cell;
- multiplexing and transmitting (32) the three modulated signals simultaneously through a fiber optic link comprised in the long-distance switched optical transport networks by means of the DWDM optical multiplexer comprised in the transmitter module;
- extracting and separating (33) the three multiplexed signals received through the fiber optic link comprised in the long-distance switched optical transport networks, the carriers contained in said received signals to be sent to the three demodulators by means of the DWDM demultiplexer comprised in the receiver module;
- extracting (34) the three 2 Gbps digital signals comprised in respective carriers by means of the three DPSK demodulators comprised in the receiver module; and,
- multiplexing (35) the three 2 Gbps digital signals into the 6 Gbps initial digital signal by means of the Ethernet switch comprised in the receiver.

**Claims**

1. System for distributing digital signals over long-distance switched optical transport networks, said signals being selected from the group consisting of HDTV signals, UHDTV signals and 3DTV signals, said system comprising an IPTV headend of primary network (1) of a service provider, at least one local node (3) and at least one wavelength-switched optical network with optical multicasting capability (8), **characterized by** further comprising at least:

    • one transmitter module (7) located at the output of the IPTV headend of primary network (1) and connecting said headend of primary network with the wavelength-switched optical network with optical multicasting capability (8), wherein said transmitter module (7) comprises at least:

        ○ one Ethernet switch (14);
        ○ three DPSK modulators (15A, 15B, 15C);
        ○ one DWDM optical multiplexer (16);

    • one receiver module (9) per local node (3) connecting said local node (3) with the wavelength-switched optical network with optical multicasting capability (8), wherein said receiver module comprises at least:

        ○ one DWDM optical demultiplexer (18);
        ○ three DPSK demodulators (19A, 19B, 19C);
        ○ one Ethernet switch (10).

2. System for distributing digital signals over long-distance switched optical transport networks according to claim 1, **characterized in that** the Ethernet switch (14) comprised in the transmitter module (7) distributes the digital signal (17) from the 6 Gbps headend equipment to the three DPSK modulators (15A, 15B, 15C) by means of three carriers each of them comprising a 2 Gbps digital signal.

3. System for distributing digital signals over long-distance switched optical transport networks according to claim 2, **characterized in that** each DPSK modulator (15A, 15B, 15C) comprised in the transmitter module (7) modulates the carrier at a frequency, such that a DPSK modulator (15B) modulates a carrier at the central frequency f0 of a standard cell (20B); the other two modulators (15A, 15C) modulate the carriers at a frequency of 10 GHz above (20C) and below (20A) the value of the central frequency f0 of the standard cell.

4. System for distributing digital signals over long-distance switched optical transport networks according to claim 3, **characterized in that** the DWDM optical multiplexer (16) comprised in the transmitter module (7) multiplexes the three modulated digital signals from the three DPSK modulators and transmits them through the wavelength-switched optical network with optical multicasting capability (8).

5. System for distributing digital signals over long-distance switched optical transport networks according to claim 4, **characterized in that** the DWDM optical demultiplexer (18) comprised in the receiver module (9) extracts and separates the three carriers comprised in respective multiplexed signals received through the wavelength-switched optical network with optical multicasting capability (8) from the DWDM optical multiplexer (16), to be sent to the three DPSK demodulators (19A, 19B, 19C).

6. System for distributing digital signals over long-distance switched optical transport networks according to claim 5, **characterized in that** each of the three DPSK demodulators (19A, 19B, 19C) comprised in the receiver module (9) extracts the digital signal comprised in each of the three carriers.

7. System for distributing digital signals over long-distance switched optical transport networks according to claim 6, **characterized in that** the Ethernet switch (10) comprised in the receiver module (9) multiplexes the 2 Gbps signals received from the three DPSK demodulators (19A, 19B, 19C) into the 6 Gbps initial digital signal (17).

8. Method for distributing digital signals over long-distance switched optical transport networks, said digital signals being selected from the group consisting of digital HDTV signals, digital UHDTV signals and digital 3DTV signals, for the system defined in claim 1, **characterized by** further comprising at least the following steps:

• distributing (30) the digital signal to three DPSK modulators by means of an Ethernet switch comprised in the transmitter module (7);
• modulating (31) the digital signal in three carriers the central frequencies of which are separated from one another by 10 GHz by means of the three DPSK modulators comprised in the transmitter module (7), such that the central frequency of a carrier coincides with the central frequency f0 of a standard cell and the central frequency of the other two carriers are 10GHz above and 10 GHz below the central frequency f0 of the standard cell;
• multiplexing and transmitting (32) the three modulated signals simultaneously through a wavelength-switched optical network with optical multicasting capability, by means of the DWDM optical multiplexer comprised in the transmitter module (7);
• extracting and separating (33) the three multiplexed signals received through the wavelength-switched optical network with optical multicasting capability, the carriers contained in said received signals to be sent to the three demodulators by means of the DWDM demultiplexer comprised in the receiver module;
• extracting (34) the three 2 Gbps digital signals comprised in respective carriers by means of the three DPSK demodulators comprised in the receiver module; and,
• multiplexing (35) the three 2 Gbps digital signals into the 6 Gbps initial digital signal by means of the Ethernet switch comprised in the receiver.

HIGH LEVEL IPTV SERVICE ARCHITECTURE

FIG. 1

EP 2 521 294 A1

IPTV HEADEND OF
PRIMARY NETWORK — 1

TRANSMITTER MODULE — 7

WSON NETWORK WITH CAPABILITY
OF OPTICAL MULTICASTING — 8

RECEIVER MODULE — 9

LOCAL IPTV NODE — 3

# FIG. 2

FIG. 3

FIG. 4

FIG. 5

FIG. 6

EP 2 521 294 A1

START

DISTRIBUTING THE DIGITAL SIGNAL TO THREE DPSK
MODULATORS BY MEANS OF AN ETHERNET SWITCH
COMPRISED IN THE TRANSMITTER MODULE

30

MODULATING THE DIGITAL SIGNAL IN THREE CARRIERS
WITH FREQUENCY F0 -10 GHZ, F0, F0 + 10 GHZ

31

MULTIPLEXING AND TRANSMITTING THE THREE MODULATED
SIGNALS BY MEANS OF A DWDM OPTICAL MULTIPLEXER

32

EXTRACTING AND SEPARATING THE THREE MULTIPLEXED
SIGNALS BY MEANS OF A DWDM OPTICAL DEMULTIPLEXER

33

EXTRACTING THE THREE SIGNALS BY MEANS OF THREE DPSK
DEMODULATORS COMPRISED IN THE RECEIVER MODULE

34

MULTIPLEXING THE THREE 2 GBPS DIGITAL SIGNALS INTO A
6 GBPS SIGNAL BY MEANS OF THE ETHERNET SWITCH
COMPRISED IN THE RECEIVER

35

END

FIG. 7

**EP 2 521 294 A1**

# INTERNATIONAL SEARCH REPORT

International application No.

PCT/ ES 2009/070641

A. CLASSIFICATION OF SUBJECT MATTER

see extra sheet

According to International Patent Classification (IPC) or to both national classification and IPC

B. FIELDS SEARCHED

Minimum documentation searched (classification system followed by classification symbols)
H04J14/02, H04B10/04, H04B10/06

Documentation searched other than minimum documentation to the extent that such documents are included in the fields searched

Electronic data base consulted during the international search (name of data base and, where practicable, search terms used)

INVENES, EPODOC, WPI, NPL, XPESP, XPAIP, XPI3E, INSPEC.

C. DOCUMENTS CONSIDERED TO BE RELEVANT

| Category* | Citation of document, with indication, where appropriate, of the relevant passages | Relevant to claim No. |
|---|---|---|
| A | US 2003058504 A1 (CHO et al.) 27.03.2003, the whole document. | 1-8 |
| A | US 2003007216 A1 (CHRAPLYVY et al.) 09.01.2003, the whole document. | 1-8 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | | |
| | | "&" | document member of the same patent family |

| Date of the actual completion of the international search | Date of mailing of the international search report |
|---|---|
| 24 September 2003      (24.09.2003) | **(28/09/2010)** |
| Name and mailing address of the ISA/ O.E.P.M. Paseo de la Castellana, 75 28071 Madrid, España. Facsimile No.  34 91 3495304 | Authorized officer J. Botella Maldonado Telephone No. +34 91 349 53 82 |

Form PCT/ISA/210 (second sheet) (July 2009)

15

## INTERNATIONAL SEARCH REPORT

Information on patent family members

| International application No. |
| --- |
| PCT/ ES 2009/070641 |

| Patent document cited in the search report | Publication date | Patent family member(s) | Publication date |
| --- | --- | --- | --- |
| US 2003058504 A | 27.03.2003 | WO 0227994 A | 04.04.2002 |
| | | AU 9643001 A | 08.04.2002 |
| | | US 2002145787 A | 10.10.2002 |
| | | US 7167651 B | 23.01.2007 |
| | | US 2002186435 A | 12.12.2002 |
| | | US 7076169 B | 11.07.2006 |
| | | US 2002196509 A | 26.12.2002 |
| | | US 7315697 B | 01.01.2008 |
| | | US 7224906 B | 29.05.2007 |
| | | US 2003058499 A | 27.03.2003 |
| | | US 7110677 B | 19.09.2006 |
| | | WO 03028264 A | 03.04.2003 |
| | | WO 03028267 A | 03.04.2003 |
| | | EP 1329047 A | 23.07.2003 |
| | | EP 20010977299 | 26.09.2001 |
| | | US 2003147116 A | 07.08.2003 |
| | | US 7266307 B | 04.09.2007 |
| | | WO 03067768 A | 14.08.2003 |
| | | AU 2003209427 A | 02.09.2003 |
| | | US 2004028418 A | 12.02.2004 |
| | | US 7272271 B | 18.09.2007 |
| | | JP 2004511128 T | 08.04.2004 |
| | | US 2004096143 A | 20.05.2004 |
| | | US 7327913 B | 05.02.2008 |
| | | US 2007110362 A | 17.05.2007 |
| | | US 7397979 B | 08.07.2008 |
| | | US 2007140705 A | 21.06.2007 |
| | | US 7391969 B | 24.06.2008 |
| | | US 2007274733 A | 29.11.2007 |
| | | US 7715720 B | 11.05.2010 |
| | | US 2008175600 A | 24.07.2008 |
| | | US 7512338 B | 31.03.2009 |
| | | US 2009142051 A | 04.06.2009 |
| | | US 7801395 B | 21.09.2010 |
| | | US 2010028024 A | 04.02.2010 |
| US 2003007216 A | 09.01.2003 | CA 2384234 A | 21.12.2002 |
| | | CN 1394027 A | 29.01.2003 |
| | | CN 100502274 C | 17.06.2009 |
| | | JP 2003060580 A | 28.02.2003 |

Form PCT/ISA/210 (patent family annex) (July 2009)

16

## INTERNATIONAL SEARCH REPORT

| International application No. |
| --- |
| PCT/ ES 2009/070641 |

CLASSIFICATION OF SUBJECT MATTER

*H04J 14/02* (2006.01)
*H04B 10/04* (2006.01)
*H04B 10/06* (2006.01)